# EUROPEAN PATENT APPLICATION

(11) **EP 4 151 131 A1**
(43) Date of publication of application: **22.03.2023**
(21) Application number: 21196911.8
(22) Date of filing: 15.09.2021
(51) Int. Cl.: A47J 37/06

(54) **STEAM COOKING APPARATUS**

(71) Applicant: Philips Domestic Appliances Holding B.V., 5656 AG Eindhoven (NL)
(72) Inventor: VAUPOT, Jan, 5656 AE Eindhoven (NL); SLADECEK, Marcel, 5656 AE Eindhoven (NL)
(74) Representative: de Vries, Janna

(57) **Abstract**

A steam cooking apparatus has a cooking chamber, a steam generator for generating steam to be provided to the cooking chamber and a heating system. A food support is for mounting in the cooking chamber. A flow redirecting arrangement is provided at the front of the cooking chamber for redirecting flow from the front of the cooking chamber away from the stream generator and towards the food support. This improves the uniformity of the cooking process, particular when the steam cooking apparatus is used in a non-steam mode, and uniform browning of food is desired.

## Description

### FIELD OF THE INVENTION

This invention relates to a steam cooker, also referred to as a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking generally operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

A traditional steamer comprises a pan for placing over the hob of a cooker, in which water is boiled. Food to be steamed is mounted over the pan in trays having perforated bases.

Steam cookers are now well known and comprise a steam cooking chamber around which hot air and steam are circulated by a fan. The steam cooker is for example a top-loaded device, rather than a more conventional steam oven with a front door.

Steam is introduced into the cooking chamber, either from an external steam source or else generated internally within the cooking chamber for example by using a vaporizer at the bottom of the cooking chamber. A heating chamber adjacent to the cooking chamber comprises a fan and a heater to generate a circulatory flow of hot air and steam. The steam generation may take place in the heating chamber instead of in the cooking chamber.

The heating chamber is a closed unit next to the main cooking chamber, but it has at least one opening for air intake from the cooking chamber and at least one opening for air delivery into the cooking chamber.

It is known for steam cookers of this type to have a non-steam mode, whereby the cooking takes place with no additional humidity, and at a higher temperature, such as 160 degrees Celsius. In this case, the steam cooker performs in the manner of an air fryer.

However, the cooking end results when performing this air frying function with a steam cooker are not as good as with a dedicated air fryer.

This invention is based on the recognition that the cooking results in the steam cooker (when used for dry cooking) are worse as a result of the weaker air flow in the steam cooker.

### SUMMARY OF THE INVENTION

The invention is defined by the claims.

According to examples in accordance with an aspect of the invention, there is provided a steam cooking apparatus, comprising:
a cooking chamber;
a steam generator for generating steam to be provided to the cooking chamber;
a heating chamber adjacent the cooking chamber at the back of the cooking chamber;
a heating arrangement located within the heating chamber for heating air laden with steam;
a vent arrangement between the cooking chamber and the heating chamber to allow a circulatory flow of steam laden air between the heating chamber and the cooking chamber; and
a food support for mounting in the cooking chamber,
wherein the apparatus further comprises a flow redirecting arrangement at the front of the cooking chamber for redirecting flow from the front of the cooking chamber away from the bottom of the cooking chamber towards the food support.

When the steam generator is at the bottom to the cooking chamber, this means some of the flow that would be directed to the steam generator is redirected towards the food support.

The flow redirecting element alters the flow conditions in the cooking chamber to achieve more uniform heating in the region of the food support. This result in increased browning homogeneity (when using the steam cooker in a non-steam mode) for various food types such as fish. It provides an improved heat transfer to the food and an increased local air speed in the vicinity of the food, e.g. above 1 m/s.

The improved cooking results in reduced protein - albumin leakage for cooking fish, and shorter cooking times for certain food types. The introduction of the flow redirecting arrangement enables a low cost improvement to existing products with significant cooking performance improvement.

The flow redirecting arrangement for example comprises a spoiler. This is a projecting fin, for example with a relatively long length and a short projecting depth.

In one example, the spoiler extends inwardly from an inner surface of a front wall of the cooking chamber. Thus, it interrupts the flow of air down the front surface of the cooking chamber, and redirects that flow at least partially towards the food support.

The spoiler is for example at the level of the bottom of the food support, so that the redirected air flow is directed towards the food.

In another example, the spoiler extends from a front area of the food support. It may project forwardly towards a front wall of the cooking chamber or downwardly towards the bottom. In this case, a modified food support provides the flow altering function.

The spoiler for example has a depth to substantially fill a gap between the food support and the cooking chamber. The spoiler for example has a length between 0.5 and 0.9 times a width of the food support. Thus, the spoiler does not need to extend the full width of the food support to make a significant difference in air flow conditions.

Instead of a projecting spoiler, the flow redirecting arrangement may comprise a step in an inner surface of a front wall of the cooking chamber. Thus, the internal shape of the cooking chamber has a step which performs the same function as the spoiler. Thus, the step is for example at the level of the bottom of the food support, so that the redirected air flow is towards the food.

The apparatus may further comprise upright fins at opposite ends of the flow redirecting element (spoiler or step). These provide further directing of the flow towards the food support, by forming a partially enclosed channel of air.

The apparatus may further comprise a fan in the heating chamber, wherein the vent arrangement comprises an extraction vent between the cooking chamber and the heating chamber at the location of the fan, for drawing air from the cooking chamber to the heating chamber.

In one modification, the apparatus further comprises a barrier ring around the extraction vent. This prevents air entry to the extraction vent from steep angles, and thereby creates a further alteration to the flow conditions, which has again been found to result in more uniform heating in the region of the food support.

The apparatus may further comprise a blocking element spaced over the extraction vent. This prevents air entry to the extraction vent directly from in front, and again thereby creates a further alteration to the flow conditions. This has also been found to result in more uniform heating in the region of the food support.

The blocking element may comprise a disc (i.e. a solid closed shape) or a plate with a central opening.

The vent arrangement for example also comprises a delivery vent between the heating chamber and the cooking chamber, for delivering heated air to the cooking chamber, and a fin arrangement is provided at the delivery vent. Thus, as well as, or instead of, altering the flow conditions from the cooking chamber to the heating chamber, the flow conditions from the heating chamber to the cooking chamber can be controlled to provide more uniform heating.

The invention also provides a steam cooking apparatus, comprising:
a cooking chamber;
a steam generator for generating steam to be provided to the cooking chamber;
a heating chamber adjacent the cooking chamber at the back of the cooking chamber;
a fan in the heating chamber;
a heating arrangement located within the heating chamber for heating air laden with steam;
a vent arrangement between the cooking chamber and the heating chamber to allow a circulatory flow of steam laden air between the heating chamber and the cooking chamber; and
a food support for mounting in the cooking chamber,
wherein the vent arrangement comprises an extraction vent between the cooking chamber and the heating chamber at the location of the fan, for drawing air from the cooking chamber to the heating chamber,
wherein the apparatus further comprises a barrier ring around the extraction vent.

This aspect relates in particular to the use of a ring around extraction vent as also discussed above. This design may be combined any combination of the other features explained above, namely the flow redirecting element at the front of the cooking chamber (spoiler or stepped cooking chamber), the optional fins at the ends of the flow redirecting element, the blocking element over the extraction vent and the fins at the delivery vent.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known cooking apparatus;
Figure 2 shows the cooking chamber opened up to show the rear wall area and the first and second side wall areas;
Figure 3 shows a simplified diagram of the cooking apparatus and shows the flow paths;
Figure 4 shows a first example of a modification having a spoiler to improve the air flow conditions in the food chamber;
Figure 5 shows a spoiler from above;
Figure 6 shows a further refinement in which the spoiler has upright fins at opposite ends;
Figure 7 shows an alternative spoiler design;
Figure 8 shows a flow redirecting arrangement in the form of a step in an inner surface of a front wall of the cooking chamber;
Figure 9 shows a blocking element spaced over the extraction vent in the form of a solid disc;
Figure 10 shows a blocking element spaced over the extraction vent in the form of a plate with a central opening;
Figure 11 shows a modification with a barrier ring around the extraction vent; and
Figure 12 shows a fin arrangement for the delivery vent.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a steam cooking apparatus with a cooking chamber, a steam generator for generating steam to be provided to the cooking chamber and a heating system. A food support is for mounting in the cooking chamber. A flow redirecting arrangement is provided at the front of the cooking chamber for redirecting flow from the front of the cooking chamber away from the stream generator and towards the food support. This improves the uniformity of the cooking process, particularly when the steam cooking apparatus is used in a non-steam mode, and uniform browning of food is desired.

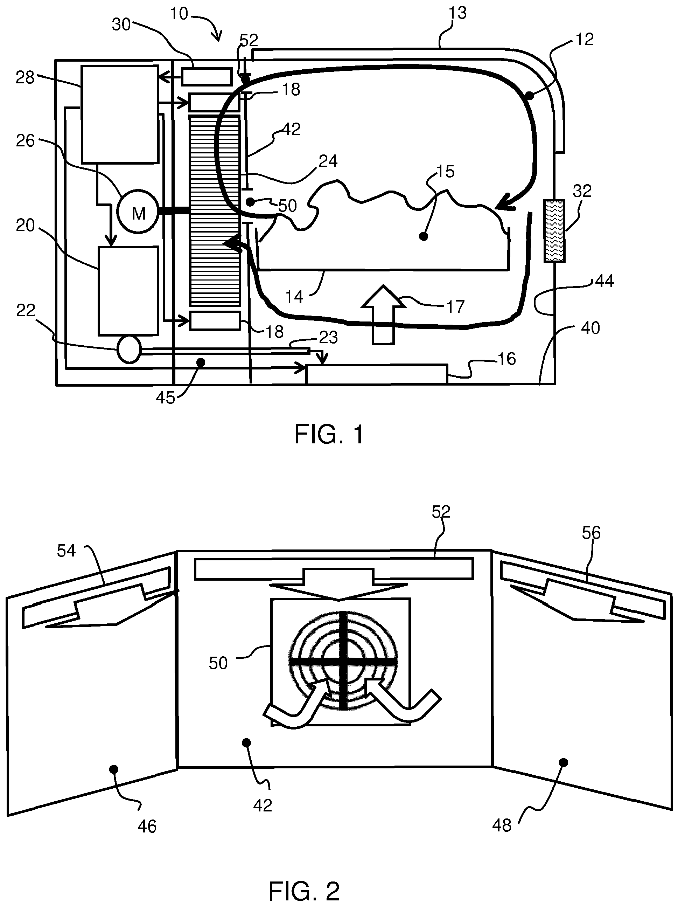

Figure 1 shows a known cooking apparatus 10, in particular as disclosed in WO 2020/148187.

The cooking apparatus comprises a cooking chamber 12 (i.e. a food chamber in which food to be cooked is placed) in which a food support (basket) 14 is mounted. The cooking chamber has a viewing window 13 which may also be the openable lid of the apparatus. Food 15 to be cooked is placed on the food support which then places the food near the center of the cooking chamber. The food support has air permeable side walls and optionally an air permeable base so that air and steam can circulate through the support to the food.

There is a heating arrangement which in this example comprises a first heater 16 for generating steam and a second heater 18 for heating air laden with steam. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the cooking chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the cooking chamber, where the food is located. However, the temperature sensor, which may be a negative temperature coefficient (NTC) temperature sensor, may be located anywhere in the cooking chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The second heater may further heat the steam for example to 120 degrees Celsius, or in the range 110 to 120 degrees Celsius. This approach is explained in WO 2020/0099339. Higher temperatures up to 200 degrees Celsius could be considered as well.

The circulation system circulates the heated steam around the cooking chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100 degrees Celsius. Water is then added to the first water heater 16. This pre-heating improves the avoidance of condensation at the window of the transparent lid as discussed below.

The device also has an operation mode without any steam generation. This invention is in particular aimed at improving the cooking results when used in the operation mode without steam generation, as discussed further below.

The cooking chamber 12 comprises a base 40, a rear wall area 42, first and second opposing side wall areas and a front wall area 44. These together define a closed chamber. The rear wall area 42 defines a separation wall which separates the cooking chamber 12 from a heating chamber 45 in which (at least) the fan blades 24 and second heater 18 are housed. In the example shown, the motor 26, water reservoir 20, dosing system 22, and controller 28 are in a further chamber which is isolated from the heating chamber (i.e. there is no gas or liquid passage between them). However, there may be different components in the different chambers.

Figure 2 shows the cooking chamber opened up to show the rear wall area and the first and second side wall areas 46, 48 to show one example of vent arrangement.

The circulation system draws air out of the cooking chamber through an extraction vent 50 in the rear wall area. This vent leads to the fan blades.

A delivery vent arrangement for delivering air (and steam) comprises a first delivery vent 52 at a top region of the rear wall area above the extraction vent 50. It may extend across at least half of the width of the rear wall area, such as across more than 60%, 70% or 80% of that width.

In this example, a second delivery vent 54 is at a top region of the first side wall area 46 and a third delivery vent 56 is at a top region of the second side wall area 48.

It is possible through design of the vents and fan to control the circulation of air and steam within the cooking chamber in a reliable and repeatable way.

Note that the term wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

The arrangement of vents shown enable a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

To the extent described above, the steam cooking apparatus is as described in WO 2020/148187.

The invention relates to control of the air flow particularly for the no steam cooking mode.

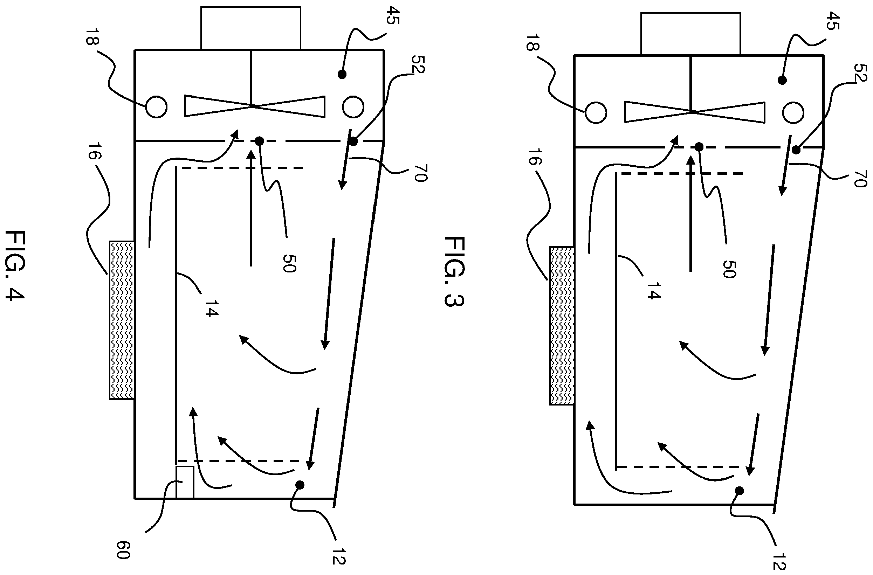

Figure 3 shows a simplified diagram of the cooking apparatus including the food support, and showing the flow paths.

It shows the cooking chamber 12, heating chamber 45, the first heater 16 (the water heater for generating steam), and the second heater 18 (for heating the air laden with steam).

The main circulatory flow is shown as 70 from the delivery vent 52 to the extraction vent 50. At the front of the cooking chamber, the flow largely follows the internal surface of the cooking chamber, down to the bottom of the cooking chamber. Figure 3 also shows that the lid is inclined downwardly from the rear wall to the front wall. This further assists in preventing condensation of steam at the transparent section of the lid via heating.

Figure 4 shows a first example of a modification to improve the air flow conditions in the food chamber. The apparatus comprises a flow redirecting arrangement 60 at the front of the cooking chamber for redirecting flow from the front of the cooking chamber away from the stream generator and towards the food support 14.

The change in flow paths is schematically shown, and can be seen by comparing Figure 4 with Figure 3. The flow redirecting element 60 alters the flow conditions in the cooking chamber to achieve more uniform heating in the region of the food support.

This results in increased browning homogeneity (when using the steam cooker in a non-steam mode) for various food types such as fish. It provides an improved heat transfer to the food and an increased local air speed in the vicinity of the food, e.g. above 1 m/s.

The improved cooking process results in reduced protein - albumin leakage for cooking fish, and shorter cooking times for certain food. The introduction of the flow redirecting arrangement enables a low cost improvement to existing products with significant cooking performance improvement.

In the example of Figure 4, the flow redirecting arrangement 60 comprises a spoiler extending widthwise across the front wall of the cooking chamber, and projecting back towards the interior volume of the cooking chamber. The spoiler is a projecting fin, for example with a relatively long length and a short projecting depth. The spoiler is for example at the level of the bottom of the food support, so that the redirected air flow is towards the food. However, it may be slightly raised above the bottom of the food support.

In an alternative but equivalent design, the spoiler projects forwards from the food support (basket) 14. It creates the same flow barrier, essentially closing the gap between the food support and the front wall of the cooking chamber, thereby disturbing a flow around the inside wall of the cooking chamber.

In other alternative designs the spoiler could be a separate part which could be inserted as accessory or as attachment to the chamber or to the food support.

A system could be used for automatically moving or removing (e.g. swing in and out) the spoiler when a specific cooking method requires specific flow conditions.

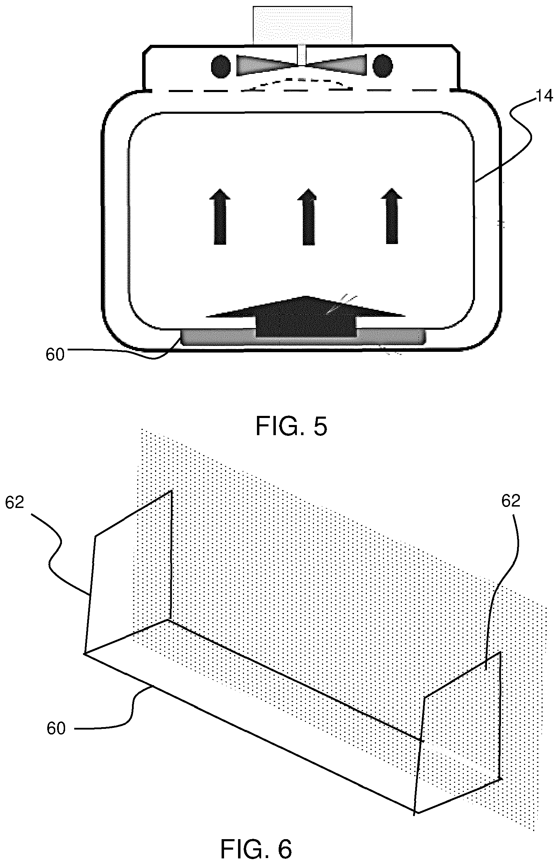

Figure 5 shows the spoiler from above, looking down into the cooking chamber, and for a version where it projects forwardly from a front face of the food support 14.

The spoiler has a length which may correspond to the full width of the food support, but the length may be less than the width of the food support as shown in Figure 5. In this example, the food support has rounded corners, and the spoiler extends only adjacent the central straight section of the front of the food support. The length is for example between 0.5 and 0.9 times the width of the food support 14.

In general, the spoiler or several individual spoilers could be mounted at several position along the width of the food support. Different fans or air intake vent concepts may need different spoiler shapes, such as symmetric or asymmetric designs, to homogenize the flow.

The spoiler has a depth (i.e. the distance by which it extends outwardly from its supporting structure) to substantially fill the gap between the food support and the cooking chamber.

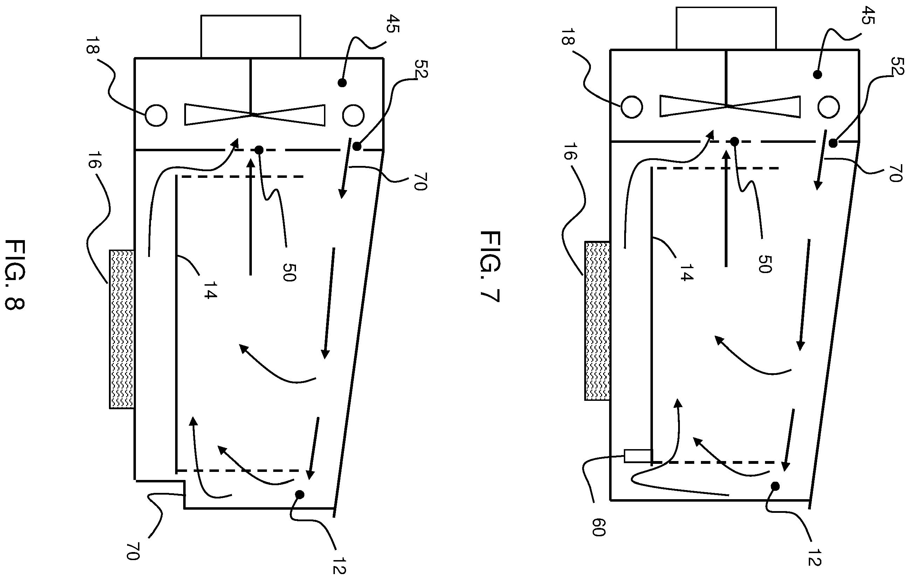

By way of example, the spoiler has a depth of at least 5mm, i.e. it projects from an underlying generally planar surface by at least 5mm, for example at least 10mm. The remaining gap between the outer projecting edge of the spoiler and the adjacent structure is for example less than 10mm, for example lass than 5mm for example less than 3mm, If the spoiler projects from the cooking chamber wall (as in Figure 4), the adjacent structure is the food support. If the spoiler projects from the food support (as in Figure 5), the adjacent structure may be the front wall of the cooking chamber (Figure 5) or it may the the bottom of the cooking chamber (Figure 7).

Figure 6 shows a further refinement in which the spoiler 60 has upright fins 62 at opposite ends of the spoiler. These provide further directing of the flow towards the food support, by forming a partially enclosed channel of air. There may be additional fins along the length of the spoiler.

The fins for example have a height of around 30mm. Like the spoiler itself, the fin depth corresponds to the gap size between the food support and the cooking chamber, for example around 15mm. The depth is preferably a small margin less than the space, to prevent scratching.

In Figure 5, the spoiler projects forwardly from the food support towards a front wall of the cooking chamber. Figure 7 shows an alternative in which the spoiler 60 extends downwardly towards the bottom. The spoiler may then be formed as part of the design of the support feet for the food support or formed as a bent over edge of the food support. Equivalently, the spoiler may project up from the bottom of the cooking chamber rather than down from the food support.

In all cases, the spoiler does not block the passage of air over the steam heater 16 - there is for example an air path around the ends of the spoiler.

As shown in Figure 8, instead of a projecting spoiler, the flow redirecting arrangement may comprise a step 70 in an inner surface of a front wall of the cooking chamber. Thus, the internal shape of the cooking chamber has a step which performs the same function as the spoiler. The step is again at the level of the bottom of the food support, so that the redirected air flow is towards the food. The step can have the same depth as the spoiler as discussed above.

The step may also perform part of the function of holding the food support. The step does not need to cover the whole cooking chamber width, but may be placed only at a central area, as for the spoiler as described above.

Airflow and airspeed analysis has shown that the airspeed in the center of the food support in the conventional design is around 0.4 m/s. Cooking tests have shown that this is the main reason for less food browning and increased albumin leakage e.g. from fish.

The flow redirecting arrangement has been found to increase the airspeed significantly and give improved cooking end-results, especially browning. The central airspeed has been found to increase to 1.7m/s. Cooking speed is also improved for some food types such as salmon and chicken, with a 10% reduction in cooking time recorded.

The spoiler may be attached to the food support or the cooking chamber as explained above. It may be made of metal, silicone or other heat resistant material.

When the spoiler is formed as part of the food support, the food support is preferably designed to fit in the cooking chamber with only one orientation, to prevent a wrongly positioned food support (e.g. with the spoiler at the air inlet side).

The measures above relate to controlling the air flow conditions locally at the front of the food container.

Other measures may be used instead or as well, as will be explained below.

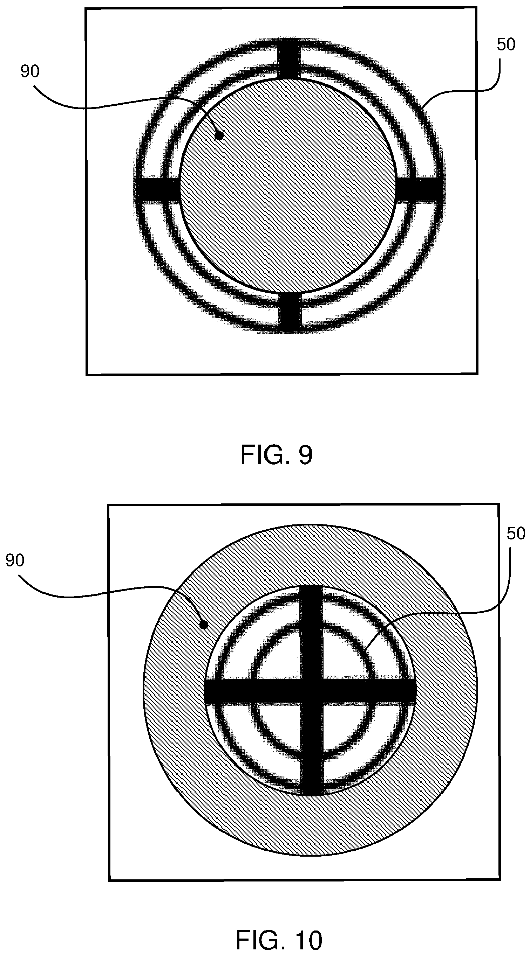

Figure 9 shows a blocking element 90 spaced over the extraction vent 50. This prevents air entry to the extraction vent directly from in front, and again thereby creates a further alteration to the flow conditions. This has also been found to result in more uniform heating in the region of the food support.

The blocking element 90 may comprise a solid disc as shown in Figure 9 or or a plate with a central opening as shown in Figure 10. The outer diameter of the plate is then larger than the diameter of the extraction vent.

The blocking element is for example spaced from the extraction vent by a spacing of e.g. 10mm to 15mm.

In Figure 9, the blocking element is a disc which is smaller than the size of the extraction vent, so that it only covers a central area of the extraction vent. It may instead be the same size as the extraction vent or indeed larger. The extraction vent for example has a diameter of around 80mm, and the blocking element may have a diameter of 30 to 60mm or 60 to 90mm or 90 to 120mm.

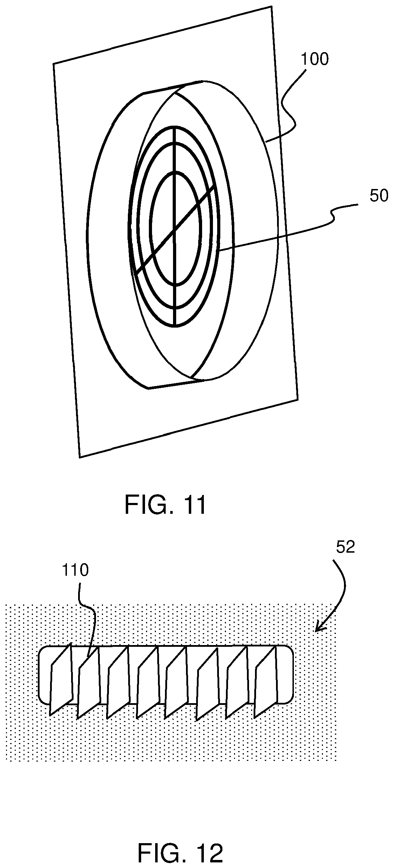

Figure 11 shows a modification with a barrier ring 100 around the extraction vent 50. This prevents air entry to the extraction vent from steep angles, and thereby creates a further alteration to the flow conditions, which has again been found to result in more uniform heating in the region of the food support. The barrier ring for example extends forwardly from the rear wall by around 10mm for example by 8mm to 15mm.

Flow guiding parts may also be provided at the delivery vent 52 between the heating chamber and the cooking chamber. Figure 12 shows a fin arrangement comprising a line of vertical fins 110 provided at the delivery vent. The flow conditions from the heating chamber to the cooking chamber can thereby be controlled to provide more uniform heating.

The various flow adaptation measures described above may be used in any combination.

The examples above make use of a heater for generating steam within the cooking chamber, However, the steam generation may instead take place in the heating chamber, or the steam generation may be external to the main body of the steam cooker, with steam delivered by a delivery tube.

The examples above also show a fan in the heating chamber. The fan may instead be in the cooking chamber, or alternative methods may be used for generating the desired circulatory flow so that the heater steam laden air circulates around the cooking chamber.

The examples above have the support (and/or pot) sitting on a base. However, the support may be received directly in the cooking chamber. The support may for example be mounted to sidewalls of the cooking chamber or it may hang down from an upper edge of the cooking chamber or the lid, with hooks. Similarly, even where there is a base, the base does not need to sit on the base of the cooking chamber. It may instead again hang down from the top of the cooking chamber or lid, or be supported be the side walls.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a cooking chamber (12);
a steam generator for generating steam to be provided to the cooking chamber (12);
a heating chamber (45) adjacent the cooking chamber at the back of the cooking chamber;
a heating arrangement (18) located within the heating chamber (45) for heating air laden with steam;
a vent arrangement (50,52,54,56) between the cooking chamber (12) and the heating chamber (45) to allow a circulatory flow of steam laden air between the heating chamber and the cooking chamber; and
a food support (75) for mounting in the cooking chamber,
wherein the apparatus further comprises a flow redirecting arrangement (60;70) at the front of the cooking chamber for redirecting flow from the front of the cooking chamber away from the bottom of the cooking chamber.

2. The apparatus of claim 1, wherein the flow redirecting arrangement comprises a spoiler (60).

3. The apparatus of claim 2, wherein the spoiler (60) extends inwardly from an inner surface of a front wall of the cooking chamber.

4. The apparatus of claim 3, wherein the spoiler (60) is at the level of the bottom of the food support.

5. The apparatus of claim 2, wherein the spoiler (60) extends from a front area of the food support.

6. The apparatus of any one of claims 2 to 5, wherein the spoiler (60) has a depth to substantially fill a gap between the food support (14) and the cooking chamber (12).

7. The apparatus of any one of claims 2 to 5, wherein the spoiler (60) has a length between 0.5 and 0.9 times a width of the food support.

8. The apparatus of claim 1, wherein the flow redirecting arrangement comprises a step (70) in an inner surface of a front wall of the cooking chamber.

9. The apparatus of any one of claims 1 to 8, further comprising upright fins (62) at opposite ends of the flow redirecting element (60;70).

10. The apparatus of any one of claims 1 to 9, further comprising a fan (24) in the heating chamber, wherein the vent arrangement comprises an extraction vent (50) between the cooking chamber and the heating chamber at the location of the fan (24), for drawing air from the cooking chamber to the heating chamber.

11. The apparatus of claim 10, wherein the apparatus further comprises a barrier ring (100) at the extraction vent.

12. The apparatus of claim 10 or 11, wherein the apparatus further comprises a blocking element (90) spaced over the extraction vent.

13. The apparatus of claim 12, wherein the blocking element (90) comprises a disc or a plate with a central opening.

14. The apparatus of any one of claims 1 to 13, wherein the vent arrangement comprises a delivery vent (52) between the heating chamber and the cooking chamber, for delivering heated air to the cooking chamber, wherein a fin arrangement (110) is provided at the delivery vent.

15. A steam cooking apparatus (10), comprising:
a cooking chamber (12);
a steam generator for generating steam to be provided to the cooking chamber (12);
a heating chamber (45) adjacent the cooking chamber at the back of the cooking chamber;
a fan (24) in the heating chamber;
a heating arrangement (18) located within the heating chamber (45) for heating air laden with steam;
a vent arrangement (50,52,54,56) between the cooking chamber (12) and the heating chamber (45) to allow a circulatory flow of steam laden air between the heating chamber and the cooking chamber; and
a food support (75) for mounting in the cooking chamber,
wherein the vent arrangement comprises an extraction vent (50) between the cooking chamber and the heating chamber at the location of the fan (24), for drawing air from the cooking chamber to the heating chamber,
wherein the apparatus further comprises a barrier ring (100) around the extraction vent.
